# EUROPEAN PATENT APPLICATION

(11) **EP 4 063 790 A1**
(43) Date of publication of application: **28.09.2022**
(21) Application number: 21164964.5
(22) Date of filing: 25.03.2021
(51) Int. Cl.: G01C 21/30, B60W 30/095, G01C 21/00, B60W 60/00

(54) **A METHOD AND SYSTEM FOR SURVEYING ROAD NETWORKS**

(71) Applicant: Ordnance Survey Limited, Hampshire SO16 0AS (GB)
(72) Inventor: Draper, Charles, Southampton, Hampshire SO16 0AS (GB); Rainbow, Jacob, Southampton, Hampshire SO16 0AS (GB); Dhaliwal, Arjan, Southampton, Hampshire SO16 0AS (GB); Hunt, Freja, Southampton, Hampshire SO16 0AS (GB); Pooley, Joshua, Southampton, Hampshire SO16 0AS (GB)
(74) Representative: Halliwell, Bethan Frances

(57) **Abstract**

The present invention provides a computer-implemented method and system for identifying one or more road junctions in a network based on their similarity to a target road junction having a given configuration. A target road junction is selected having certain characteristics of interest, in particular, having a certain geometric configuration of connecting roads. Certain configurations may have various real world implications such as the amount of sun glare experienced by incoming drivers, the likelihood of road incidents and the operation of traffic control systems. A topographic database comprising pre-processed attribute data for each of the road junctions within a geographic area is then searched to identify one or more road junctions that match (within an accepted tolerance level) the geometric configuration and other attributes of the target road junction. The matched road junctions may then be output for use in various applications, such as calculating the location of road sensors for use with autonomous vehicles, the designing of test centres for autonomous vehicles, the programming and controlling of autonomous vehicles, and the designing and programming of traffic control systems.

## Description

### Technical Field

Embodiments of the present invention relate to a computer implemented method and system for analysing road networks. In particular, the present inventions relates to the identification of one or more road junctions in a network based on a target road junction having a given configuration for use in various applications road and automotive applications.

### Background to the Invention and Prior Art

Most providers of digital maps rely on a very detailed topographical map database which stores the underlying data. For example, Ordnance Survey uses the very large scale topographic product OS MasterMap^{®}, which records every feature larger than a few metres in one continuous dataset, and is constantly being updated.

A topographic feature is an abstraction of a real-world object. It is not the real-world object itself. For instance, the OS MasterMap^{®} product is composed of discrete vector features, each of which has a feature type, geometry, and various feature attributes. The topographic features may be represented as point features, linear features and areal features. Road networks, for example, are typically represented as a plurality of linear features connected by point features, or nodes, that represent junctions where three or more roads meet.

It is sometimes necessary to survey large road networks in order to identify junctions with certain characteristics for use in widespread applications such as road planning, maintenance and re-development, as well as the testing, controlling and programming of autonomous vehicles. However, known methods typically involve surveying a network in person and/or undertaking manual comparison of network junctions using physical and/or digital maps. However, this can be extremely time consuming and inaccurate, particularly for large geographic areas and complex junctions.

### Summary of the Invention

Embodiments of the present invention address the above noted problems by providing a computer-implemented method and system for identifying one or more road junctions in a network based on their similarity to a target road junction having a given configuration. In use, a target road junction is selected having certain characteristics of interest, in particular, having a certain geometric configuration of the connecting roads. In this respect, certain configurations may have various real world implications such as the amount of sun glare experienced by incoming drivers, the likelihood of road incidents and the operational requirements of traffic control systems. A topographic database comprising pre-processed attribute data for each of the road junctions within a geographic area is then searched to identify one or more road junctions that match (within an accepted tolerance level) the geometric configuration and other attributes of the target road junction. As such, the invention provides a way of quickly and efficiently identifying a plurality of similar road junctions without the need for laborious and time consuming manual inspection and validation by the user. The matched road junctions may then be output for use in various applications, including but not limited, calculating the location of road sensors for use with autonomous vehicles, the designing of test centres for autonomous vehicles, the programming and controlling of autonomous vehicles, and the designing and programming of traffic control systems.

A first aspect of the present invention provides a method of identifying matching road junctions in a network, the method comprising receiving instructions to identify one or more junctions based on a target junction, identifying the target junction in a topographic dataset, the target junction comprising a node and a plurality of line features extending therefrom, wherein the topographic dataset comprises a first set of attribute data associated with the target junction, the first set of attribute data at least comprising an angular position of the plurality of line features about the node, identifying a plurality of test junctions in the topographic dataset, wherein each of the plurality of test junctions comprises a node and a plurality of line features extending therefrom, and wherein the topographic dataset comprises respective sets of attribute data for each of the plurality of test junctions, the respective sets of attribute data at least comprising an angular position of the plurality of line features about the node, comparing the first set of attribute data of the target junction to the respective sets of attribute data of the plurality of test junctions, matching one or more test junctions to the target junction in dependence on said comparison, and providing the one or more matched test junctions for output to the user.

As such, upon receiving instructions to identifying one or more junctions to a target junction, pre-processed attribute data for all of the junctions in a network is used to quickly compare the target junction to the other junctions in the dataset and identify those that have substantially the same attributes, in particular, the same or substantially the same angular geometry. By pre-processing the attributes of the junctions are storing this as attribute data in the topographic dataset, an iterative search of the test junctions can be performed. As each test junction is processed, as soon as a mismatch with one of the line features of the target junction is identified, the system stops processing that test junction and moves onto the next. This allows all of the test junctions to be searched quickly and a set of matched junctions output to the user almost instantaneously.

It will be appreciated that the line features are representative of the roads of each junction.

The angular position of the plurality of line features may be an absolute angular position measured from a fixed point. For example, the angular position of each line feature may be measured from one of North (0°), East (90°), South (180°) or West (270°), and in a clock-wise or anti-clockwise direction.

The angular position of the plurality of line features may be a relative angular position measured as an angle between adjacent line features. That is to say, the angular position of each line feature may be provided as the angular position relative to the adjacent line feature in either the clockwise or anti-clockwise position.

The instructions received may comprise an instruction to compare the first set of attribute data of the target junction to the respective sets of attribute data of the plurality of test junctions based on the relative angular position. In the absence of any such instruction, the comparison may be based on the absolute angular position.

The instructions may further comprise an instruction to compare the first set of attribute data of the target junction to the respective sets of attribute data of the plurality of test junctions based on a reflected angular position, wherein the comparing may comprise calculating a reflected angular position based on the relative angular position. That is to say, using the relative angular position for each junction stored in the topographic dataset, a set of reflected angular position measurements are calculated. Junctions that have a set of reflected angular positions that are similar or the same as those of the target junction may then be identified as matching.

The instructions may also comprise an input indicative of an angular tolerance level, the angular tolerance level being an acceptable amount of deviation from the angular positions of the plurality line features of the target junction. For example, the angular tolerance level may indicate that test junctions having line features with an angular position that is within 2° of the line features of the target junction will be identified as a matching junction. In doing so, junctions that are not identical but similar enough that they may have the same set of real world implications can be identified.

Preferably, the input indicative of an angular tolerance level is received via a dynamically adjustable input on a user interface. In doing so, the angular tolerance level can be adjusted and the matched test junctions updated in substantially real-time as the angular tolerance level is changed.

The first set of attribute data and the respective sets of attribute data may further comprise one or more of: a line feature hierarchy, a line feature gradient and a line feature curvature. The hierarchy is typically a label indicative of the type of road represented by the line feature, for example, a highway, a dual carriageway, a single carriageway, or a lane. The gradient may be a score calculated by dividing the difference in height between the start and end of a line feature, by the total length of the line feature. The curvature may be computed at a series of points along the entire length of the line feature, with the modulus of each of these values are then averaged to determine a curvature score for that line feature.

The instructions may further comprise at least one of an input indicative of a gradient tolerance level, the gradient tolerance level being an acceptable amount of deviation from the gradient of the plurality line features of the target junction, and an input indicative of a curvature tolerance level, the curvature tolerance level being an acceptable amount of deviation from the curvature of the plurality line features of the target junction.

The input indicative of a gradient tolerance level and/or the input indicative of a curvature tolerance level are preferably received via a dynamically adjustable input on a user interface. Again, this allows the acceptable tolerance levels for the gradient and curvature to be adjusted and the matched test junctions updated in substantially real-time as the tolerance levels are changed.

The first set of attribute data and the respective sets of attribute data may be stored in the topographic database in respective table structures. Each table structure may include rows for each type of attribute data (i.e. the absolute angular position, relative angular position, hierarchy, gradients etc.), each row comprising a list of entries for each of the line features in the junction. By pre-processing the attributes of each junction and creating simplified data structures to store the attribute data of each node with minimal memory requirements, large numbers of comparisons can be made without needing large amounts of processing power. For example, taking a random location in Southampton and drawing a 1km circle around it, approximately 400 test junction nodes can be identified. If each node has the minimum number of line features needed to qualify as a junction, typically, three line features, and the matching is done on only the absolute angles of those line features, up to 1200 individual comparisons would be required to find all the matching nodes. If the matching was also based on hierarchy, gradient and curvature, this increases to up to 4800 comparisons. As such, the use of the simplified data structures allows the line features of each test node to be iteratively compared to the line features of the target junction, and the matched junctions output to the user almost instantly.

As mentioned above, the comparing of the first set of attribute data of the target junction to the respective sets of attribute data of the plurality of test junctions may be performed by iteratively searching the table structure of each test node. As soon as a mismatch between the attribute data of the target node and test node is detected, the processing of that test node is aborted and the processing of the next test node is commenced. This enables the test nodes to be processed quickly and without any unnecessary processing.

Each respective table structure may also comprise a node identifier for the respective junction. By including an identifier, any matched junctions can be quickly linked back to other datasets for further analysis. For example, the same nodes can be identified in the original topographic dataset with all of the attribute data that contains, and then linked to another dataset that comprises addressing information. If the identified junctions are those that are to undergo construction work, the identifiers can be used to link the identified junctions to those in the address database to identify one or more buildings that will be affected by that construction work.

Providing the one or more matched test junctions for output to the user may comprise generating a map image for output to a display device. In this respect, each of the matched junctions may be highlighted in some way, for example, by displaying the nodes in a specific colour. Further information on each of the junctions, for example, the attribute date, may be displayed to the user upon selection of one of the nodes or by hovering the cursor over the node of interest.

A further aspect provides a method of determining sensor locations for a road network, comprising identifying a target junction based on one or more attributes of interest, identifying one or more matching junctions according to the method described above, and determining one or more sensor locations based on the one or more matched test junction.

The sensors may be any type of sensor that may be needed along a road, for example, transponders for communicating with autonomous vehicles, image sensors or motion sensors for monitoring dangerous driving, or other passive road sensors for monitoring the condition of the road. A target junction known to needing a certain type of sensor installed on the road, for example, due to a high levels of sun glare, may be selected. Other junctions having similar angular geometry, and thus likely to have the same issues, are identified. Locations for installing sensors can then be determined based on the matched junctions.

Another aspect provides a method of determining instructions for controlling an autonomous vehicle, comprising identifying a target junction based on one or more attributes of interest, identifying one or more matching junctions according to the method described above, and determining one or more instructions for the autonomous vehicle based on the one or more matched test junction.

As such, junctions having a certain configuration, for example, with tight bends or steep approaches, may need to be identified so that an autonomous vehicle control program can programmed to know where these junctions are and how to navigate them.

A further aspect of the present invention provides a system comprising a processor, and a computer readable medium storing one or more instruction(s) arranged such that when executed the processor is caused to perform the method outlined above.

### Brief description of the Drawings

Further features and advantages of the present invention will become apparent from the following description of embodiments thereof, presented by way of example only, and by reference to the drawings, wherein:
Figure 1 is a flow diagram illustrating a method according to the present invention;
Figures 2A-C is a diagram illustrating an example of the method of Figure 1;
Figures 3A-C is a diagram illustrating an example of the method of Figure 1;
Figures 4A-B is a diagram illustrating an example of the method of Figure 1;
Figure 5 is a diagram illustrating an example of the method of Figure 1;
Figure 6 is a block diagram illustrating a computer system on which the present invention may be implemented;
Figures 7A-C illustrate an example of user interface output to a user;
Figure 8 is a flow diagram illustrating an example application of the present invention;
Figure 9 is a flow diagram illustrating a further example application of the present invention.

### Detailed Description of the Drawings

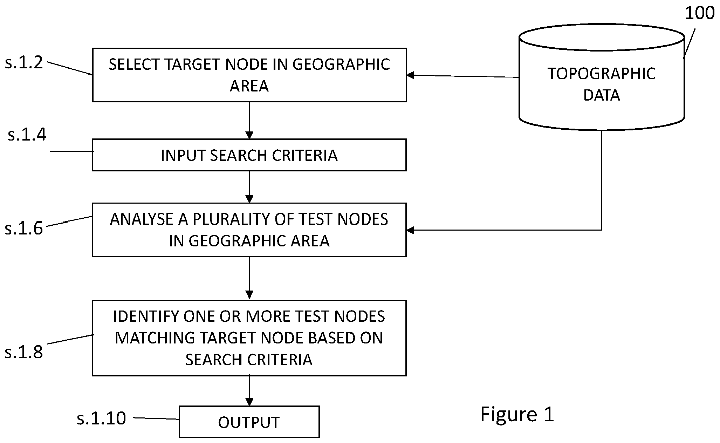

Figure 1 illustrates a method of analysing a road network to identify one or more junctions that are similar to a target junction of a given spatial configuration. In the first step 1.2, a target junction represented by a node in a topographic database 100 is selected by a user.

Once the target node has been selected, the topographic data relating to the target node is extracted from the topographic dataset 100.

The topographic database 100 stores a topographic dataset representative of the road network. The topographic dataset comprises a plurality of line features (i.e. roads) that are connected at a plurality of point features (also referred to as nodes) that represent the junctions at which the roads meet. Typically, a junction must have three roads to be categorised as a junction in the topographic dataset. For each of the nodes, the topographic dataset also comprises pre-processed attribute data, which stores information on the various characteristics of the node, for example, data comprising the angular geometry of the line features connected to the node, measured from a fix point and/or relative to each other, the gradient and curvature of the line features, and the type of road represented by the line features (e.g. highway, dual carriageway, single carriageway, lane etc.). The data may also include other information about the node and line features, such as the visibility from other line features in proximity, the number of lanes, the number of turns, and any other attributes associated with road junctions. This pre-processed attribute data for each node is then stored in some suitable database structure such as table, along with a node identifier, which can be important for linking the nodes to other datasets used in later processing.

For example, a table structure may be extracted for the selected target node, as illustrated by Table 1 below. Here each bullet point entry is representative of a road link within the junction.

**Table 1**

| Unique Junction ID | osgb4000000028227355 |
|---|---|
| Number of Road Links | 4 |
| Curvatures | • 0.0e+0 |
| | • 0.0e+0 |
| | • 0.0e+0 |
| | • 1.4e-2 |
| Road Links | • Chapel Road (Restricted Local Access Road - Single Carriageway) |
| | • Chapel Road (Restricted Local Access Road - Single Carriageway) |
| | • Chapel Road (Restricted Local Access Road - Single Carriageway) |
| | • Chapel Road (Restricted Local Access Road - Single Carriageway) |
| Road Link Angles (deg from East) | • 60.5 |
| | • 151.1 |
| | • 240.7 |
| | • 334.4 |
| Angles Between Road Links (deg) | • 90.6 |
| | • 89.6 |
| | • 93.7 |
| | • 86.1 |
| Gradient of Road Links (rise/run) | • 0.0e+0 |
| | • 1.0e-2 |
| | • 1.5e-2 |
| | • 2.2e-2 |
| Route Hierarchy | • Restricted Local Access Road |
| | • Restricted Local Access Road |
| | • Restricted Local Access Road |
| | • Restricted Local Access Road |

The user then inputs their search criteria at step 1.4 for identifying one or more junctions that substantially match the characteristics of the target node. This search criteria will include the characteristics that are to be matched, in particular, the angular geometry of the line features. This angular geometry to be searched may be the absolute angular position of the line features measured from a fixed point, or it may be the relative angular geometry of the line features to allow for rotation (i.e. ignoring the orientation of the junction). The search criteria may also provide the option to match junctions that have the same relative angular geometry but reflected.

The search criteria may also include various attributes of the road junctions, such as the gradient of the line features, the curvature of the line features and the hierarchy of the line features. Other features that may be included in the search criteria includes the visibility of the lines features, number of lanes, number of turns and the like.

The search criteria may also include a geographic area to be searched, for example, the user may input a geographic location and request a search of the geographic area within a certain distance of this location. Alternatively, the user may not be required to include a geographic area, and the whole of the topographic data set is searched.

Finally, the search criteria may also include a tolerance level of one or more characteristics included in the search criteria. That is to say, the user is able to set the extent to which the characteristics need to match. For example, for the absolute angular geometry of the line features, the tolerance level may be set at 2° such that each line feature of the test nodes may be within ±2° of the line features of the target node. In doing so, junctions that are not identical to the target junction, but are similar enough that they have the same real world implications, will also be identified as matches.

Further details of the search criteria will be described by way of example in more detail below.

At step 1.6, the remaining nodes in the target geographic area are processed to identify those that match the target node according to the search criteria. To do this, the attribute data corresponding to each of the test nodes is extracted from the topographic dataset 100 and compared to the attribute data of the target node. In this respect, by storing the pre-processed attribute data in the table structure described above, the attributes of the junctions can be easily compared by processing the data elements within each relevant column or row. This processing is performed as an iterative search, wherein each node is checked against the search criteria in turn. For each test node, as soon as one of the search criteria is not met, the processing of that test node is aborted and the system moves on to the next test node. This provides an efficient method of searching through the test nodes, whilst avoiding any unnecessary processing of test nodes that do not match the search criteria.

In some cases, the processing is performed based solely on a direct comparison of the attribute data that has been pre-processed and stored in the topographic database 100. However, it will be appreciated that further processing of the attribute data of the target node may also be required before the comparison can be performed, for example, where the user has selected to match based on the reflected angular geometry.

One or more test nodes that match the target node according to the search criteria are then subsequently identified (s.1.8). In this respect, it will be understood that a "match" does not necessarily mean that the nodes are identical in configuration, for example, in cases where a tolerance level is set or the reflected geometry criteria is selected, the test junctions may only match the target junction insofar that they meet the search criteria.

The matched test nodes may then be output to the user (s.1.10), for display and/or use in various applications, as will be described in more detail below.

As discussed above, by pre-processing the attributes of each junction and creating simplified table structures that store the attribute data of each node with minimal memory requirements, large numbers of comparisons can be made without needing large amounts of processing power. This allows the line features of each test node to be iteratively compared to the line features of the target node, and thereby identify and output the matched junctions to the user almost instantly.

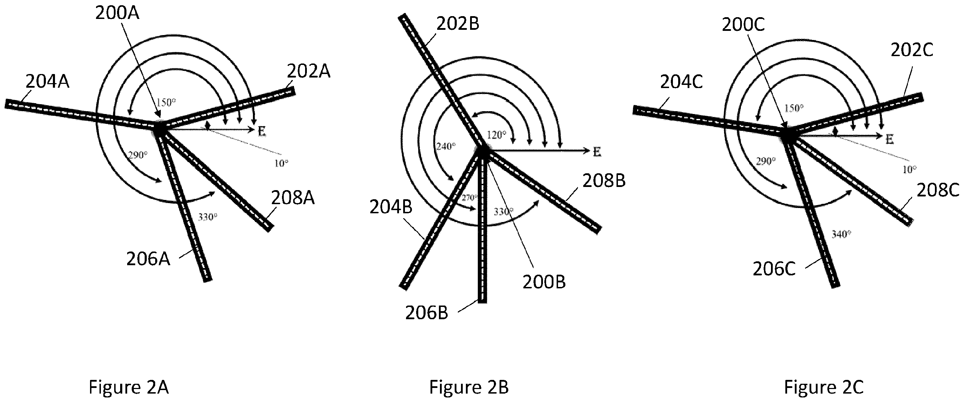

Figures 2A-C illustrate a first example of the matching process, wherein two test nodes are compared to a target node according to the absolute angular geometry of the line features (i.e. the roads) measured from a fixed point. In this example, the line features are measured anti-clockwise from East, however, it will be appreciated that the absolute angular position of the line features may be measured from any fixed point and in any direction, provided that the absolute angular geometry for all nodes stored in the topographic dataset 100 are measured in the same way.

In Figure 2A, a target node 200A is selected, the target node 200A having four line features 202A, 204A, 206A and 208A connected thereto. The attribute data for target node 200A comprises a list of absolute angle measurements for each of the line features 202A, 204A, 206A and 208A, stored as a list of values [10, 150, 290, 330] in the attribute data of the topographic dataset.

In Figure 2B, a first test node 200B is analysed by comparing the list of absolute angles [120, 240, 270, 330] stored in the topographic dataset to those of the target node 200A, from which no match is identified.

In Figure 2C, a second test node 200C is analysed by comparing the list of absolute angles [10, 150, 290, 340] stored in dataset to those of the target node 200A. Whilst this is not an exact match, the user may have included an angle tolerance of ±10°, which allows each inbound road link to independently deviate from the target angular position and still constitute a match. In such cases, the second test node 200C will be identified as a match.

It will be appreciated that the system will take into account the discontinuity at 360°. For example, provided an angle tolerance of ±2° is set, a test node with a line feature at 1° from East may still match with a target node with a line feature at 359° from East.

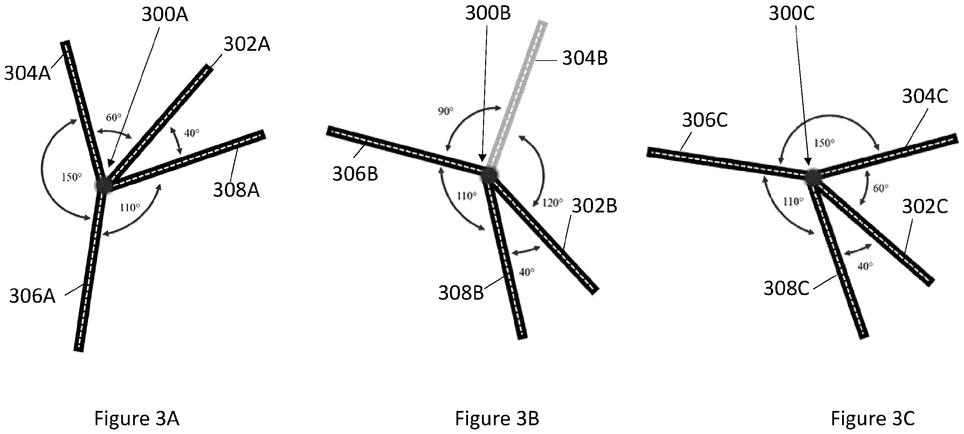

In another example, as illustrated by Figures 3A-C, two test nodes are compared to a target node according to the absolute angles of the constituent roads, but allowing for rotation (i.e. ignoring the orientation of the junction). To facilitate this, attribute data of each node in the topographic dataset 100 comprises the "relative angular geometry" of the line features. The relative angular position of the line features may be measured in any suitable way, but in this example, are provided as the angles between successive inbound line features traversing anti clockwise around the node. In doing so, junctions that have the same angular geometry regardless of the orientation can be matched.

In Figure 3A, a target node 300A is selected, the target node 300A having four line features 302A, 304A, 306A and 308A connected thereto. The attribute data for target node 300A comprises a list of relative angle measurements for each of the line features 302A, 304A, 306A and 308A, stored as a list of values [60, 150, 110, 40] in the topographic dataset.

In Figure 3B, a first test node 300B is analysed by comparing the list of relative angles [90, 110, 40, 120] stored in topographic dataset to those of the target node 300A. Since line feature 304B is in a different relative position to line feature 304A, no match is identified.

In Figure 3C, a second test node 300C is analysed by comparing the list of relative angles [150, 110, 40, 60] stored in the topographic dataset to those of the target node 300A. As the set of relative angles between the four line features 302-308C of the second test node 300C is the same as that of the target node 300A, albeit in different permutation, a match is identified.

In further example, the test nodes may be matched with the target node according to the relative angles of the constituent line features, but also allowing for reflection. To do this, the "relative angular geometry" provided in the attribute data of each node is used to calculate a reflected version. This may be done in a pre-processing step, with the "reflected angular geometry" of each node being added to the attribute data for use in the matching process. Alternatively, the "reflected angular geometry" may be performed on the fly during the matching process.

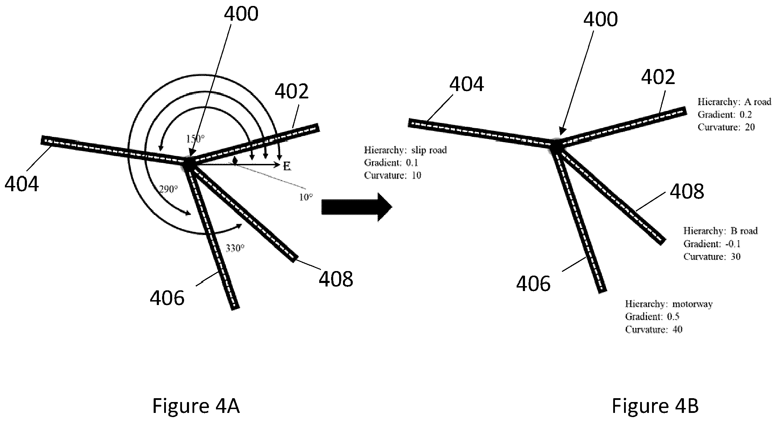

In a further example, illustrated by Figures 4A-B, the test nodes may be matched based on road hierarchy, curvature and/or gradient. The road hierarchy will typically be derived from the "feature type" information associated with each vector feature in the topographic dataset 100, whereas curvature and gradient may be calculated from the vector geometry of the line features.

Figure 4A shows a node 400 with line features 402-408 connected thereto. As shown, in Figure 4B, each line feature has a road hierarchy label. Line feature 402 is an "A road", line feature 404 is a "slip road", line feature 406 is a "motorway" and line feature 408 is a "B road".

The curvature of each road is calculated by using the standard definition of curvature (radm⁻¹) and computed at a series of points along the entire length of the line feature. The modulus of each of these values are then averaged to determine a curvature score for that line feature. In this example, line feature 402 has a curvature score of 20, line feature 404 has a curvature score of 10, line feature 406 has a curvature score of 40 and line feature 408 has a curvature score of 30. It will of course be appreciated that any suitable method of calculating curvature and assigning a curvature score may be used, provided the same method is used for every node being analysed.

Similarly, the gradient score for each line feature is determined by dividing the difference in height between the start and end of a line feature, by the total length of the line feature. In this respect, it will be appreciated that the vector geometry of the topographic features in the topographic dataset will have three dimensional components. In this example, line feature 402 has a gradient of 0.2, line feature 404 has a gradient of 0.1, line feature 406 has a gradient of 0.5 and line feature 408 has a gradient of -0.1 (i.e. it is downhill).

These features may then added to the attribute dataset for each node, for example, by adding a list of hierarchies, curvatures and gradients in the same order as the absolute angles. Taking Figures 4A-B as an example, the absolute angular geometries, hierarchies, gradient and curvature may be added in lists of values as followed:
Absolute angle: [10, 150, 290, 330]
Hierarchies: [A road, slip road, motorway, B road]
Gradients: [0.2, 0.1, 0.5, -0.1]
Curvatures: [20, 10, 40, 30]

It will however be appreciated that attributes such as gradient and curvature could also be calculated on the fly during the matching process.

To match according to these attributes, the system will first check whether "reflection" was included in the search criteria. If the user has not included reflection in the search criteria, then any test nodes that match the geometry of the target node are first identified, followed by the hierarchy, gradient and curvature attributes.

If the user did include reflection in the search criteria, once all of the test nodes with the correct geometries have been identified, each possible permutation of the hierarchy property for each of the identified test nodes is compared with that of the target node.

In further examples, the visibility of a junction is also used as a variable for performing the matching. Visibility of a given junction can be determined using a digital surface model (DSM). The junction is decomposed into a collection of points at set distances along each contributing road. With knowledge of the elevation of each of these points from topographic dataset 100, a line of sight is can be determined between all points. For each line of sight, the latitude, longitude and elevation is determined at regularly spaced intervals and compared to the height of the DSM at the same longitude and latitude. If at any location along a given line of sight, the height of the DSM exceeds the elevation of the line of sight, then the view along this line of sight is considered to be obstructed. Once this has been repeated for all points in a junction, this determines which parts of a junction will be visible from any location within that junction.

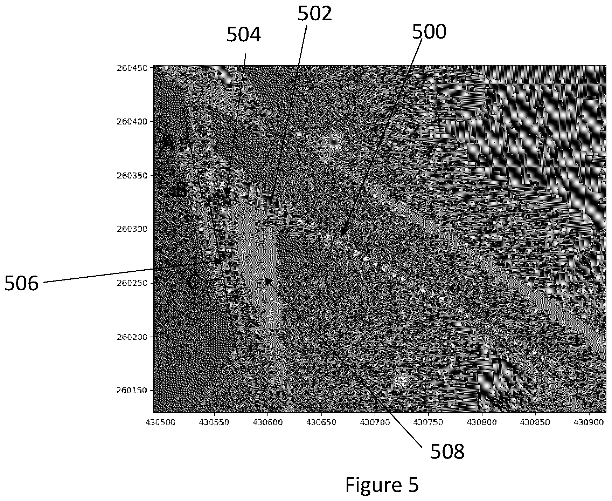

For example, Figure 5 illustrates the visibility analysis for a single point 502 along a road 500. Here, the points along the road 500 are all visible to the point 502. The road 500 is connected at a junction 504 to a second road 506. From the point 502, one section (labelled "B") of the second road 506 can be seen, however, the points in two further sections (labelled "A" and "C") are not visible due to features of the DSM. For example, a region of vegetation 508 is blocking section C.

Based on this analysis, the visibility between the line features of each node may be parameterised in some suitable way, for example, a visibility score, and added to the pre-processed attribute data.

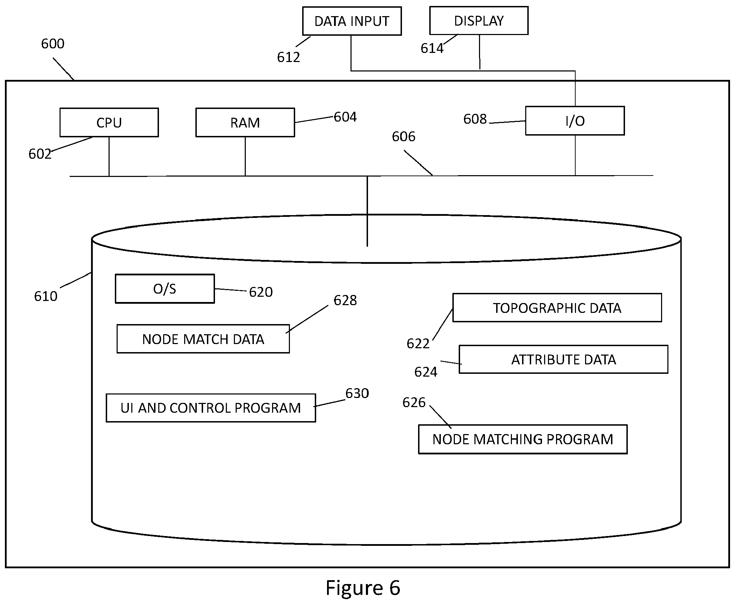

Figure 6 illustrates an example of a general computing device 600 that may form the platform for embodiments of the invention. For example, the computing device 600 may be a mobile phone, a tablet, a wearable computing device, IVI system or the like. The computing device 600 comprises a central processing unit (CPU) 602 and a working memory 604, connected by a common bus 606, and having an input-output (I/O) interface 608 arranged to receive control inputs from a user via a device connected to a data input port 612 such as a keyboard, mouse, touchscreen, push button, or other controller, and provide output information via a user interface which is displayed on a visual display device 614.

The computing device 600 is also provided with a computer readable storage medium 610 such as a hard disk drive (HDD), flash drive, solid state drive, or any other form of general-purpose data storage, upon which stored topographic data 622, attribute data 624 and node match data 628 and various programs are arranged to control the computing device 600 to operate in accordance with embodiments of the present invention. For example, stored on the computer readable storage medium 610 is an operating system program 620 that when run by the CPU 602 allows the system to operate. Also provided is an a node matching program 626, which implements the junction matching of the present invention when run by the CPU 602, as will be described in more detail below. In order to interface with and control the node matching program 626, a user interface and control program 630 is also provided, that controls the computing device 600 to provide a visual output to the display 614, and to receive user inputs via any input means connected to the data input port 612, or any other device that may be connected to the I/O interface 608 in order to control the node matching program 626.

Whilst the programs and data shown in Figure 6 are described as being stored and implemented by a single computing system, it will of course be appreciated that multiple computing devices may be used. For example, the topographic data and attribute data may be stored on one computing system in communication with a second computing system on which the node matching program is implemented.

The computing device 600 is capable of performing the method of matching junctions according to an embodiment of the present invention.

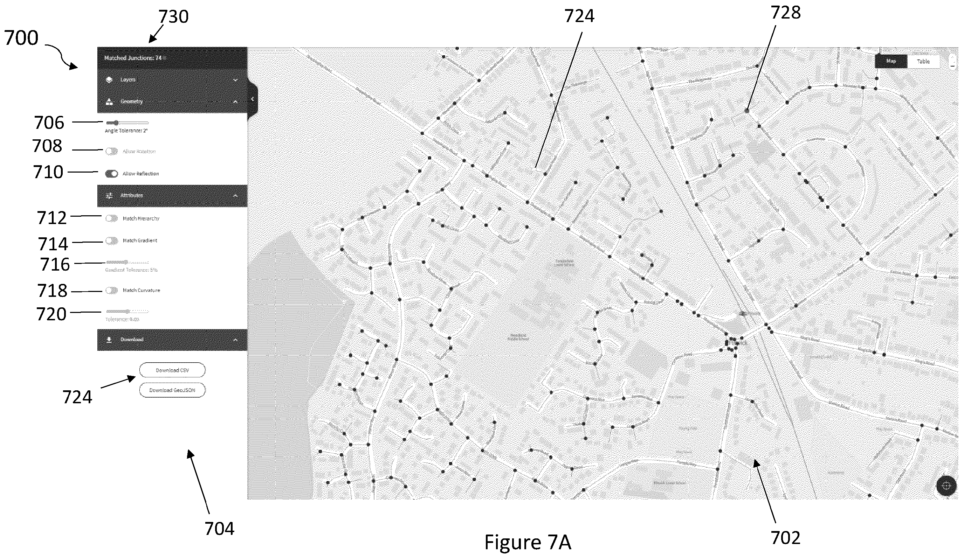

A first example of the method in use is shown in Figure 7A, which illustrates a user interface 700 output to the user, for example, via display device 614. The user interface 700 comprises a map view 702, which displays at least a portion of the geographic area being analysed, and a toolbar 704 for selecting the search criteria. The map view 702 may be rendered using the topographic data 622. The tool bar 704 includes a "geometry" section for inputting the geometric search criteria, including but not limited to, an input for the angle tolerance level 706, an input to allow angle rotation 708 and an input to allow angle reflection 710. The input for setting angle tolerance level 706 is preferably in the form of an adjustable slider that allows the angle tolerance level to be varied on the fly. As such, once the target node 724 and other search criteria have been input and a first set of results output to the user, the slider 706 can be adjusted and the matched junctions will be dynamically output in substantially real-time as the tolerance level varies.

The tool bar 704 further includes an "attribute" section for inputting search criteria relating to other attributes, including but not limited to, an input to match hierarchy 712, an input to match gradient 714 and an input to match curvature 720. There may also be an input for the gradient tolerance level 716 and the curvature tolerance level 720. The inputs for setting the gradient tolerance level 716 and the curvature tolerance level 720 are also preferably in the form of an adjustable slider that allows those parameters to be varied on the fly. Again, once the target node 724 and other search criteria have been input and a first set of results output to the user, the sliders 716 and 720 can be adjusted and the matched junctions will be dynamically output in substantially real-time as the tolerance level varies.

It will be appreciated that the tool bar 704 may include other search criteria inputs as described previously.

In use, the user may select a target junction node 724 to be matched, as well as the search criteria. In this example, the user has selected to include an angle tolerance level of 2° and to allow for reflection. The user has not selected to include any other attributes. Upon receiving the target junction node 724 and the search criteria, the node matching program 626 will extract the relevant attribute data 624 for the target junction node 724. In this respect, the attribute data 624 may include all the pre-processed data for the nodes within a geographic area, as discussed above. The node matching program 626 will then compare the attribute data of the target junction node 724 to the attribute data of other nodes within the topographic data 622. The node matching program 626 will first search for nodes with the same absolute angular geometry, within a tolerance level of 2°, followed by nodes with the same geometry in a reflected form, as discussed above, again with a tolerance level of 2°. The node matching program 626 will then identify any nodes within the geographic area matching the search criteria, and stores that as node match data 628. The results of this matching may be provided on the user interface 700, for example, as a total matched junctions 730, as well as a visual representation in the map view 702 highlighting the matched junction(s) 728. It will be appreciated that the map view 702 will be moveable so that the user can move around the map to see other matched junctions. The user interface 700 may also have a download option 724 for obtaining the full set of results, for example, in a table view or any other suitable format for outputting the results to the user.

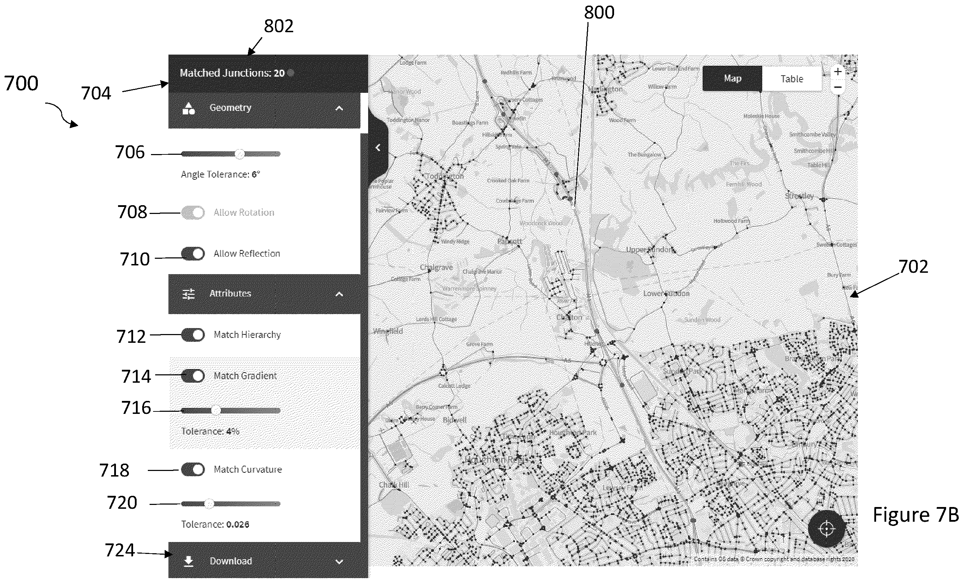

Figure 7B illustrates a further example of the user interface 700 in use. In this example, the user has selected a test junction node 800. As before, the user has selected to allow for reflected 710, but set an angle tolerance level 706 of 6°. They have also selected to match hierarchy 712, gradient 714 with a tolerance level 716 of 4% and curvature 718 with a tolerance level of 0.026. As before, the node matching program 626 will extract the relevant attribute data 624 of the matched junction and use this to match the target node 800 with other nodes within the topographic data 622. The node matching program 626 will start by matching according to the geometric search criteria. Once nodes that match the geometric criteria have been identified, the node matching program 626 will then match according to the other attributes defined in the search criteria. As the search criteria in this example was more specific, only 20 matched junctions 802 are identified and highlighted on the map view 702.

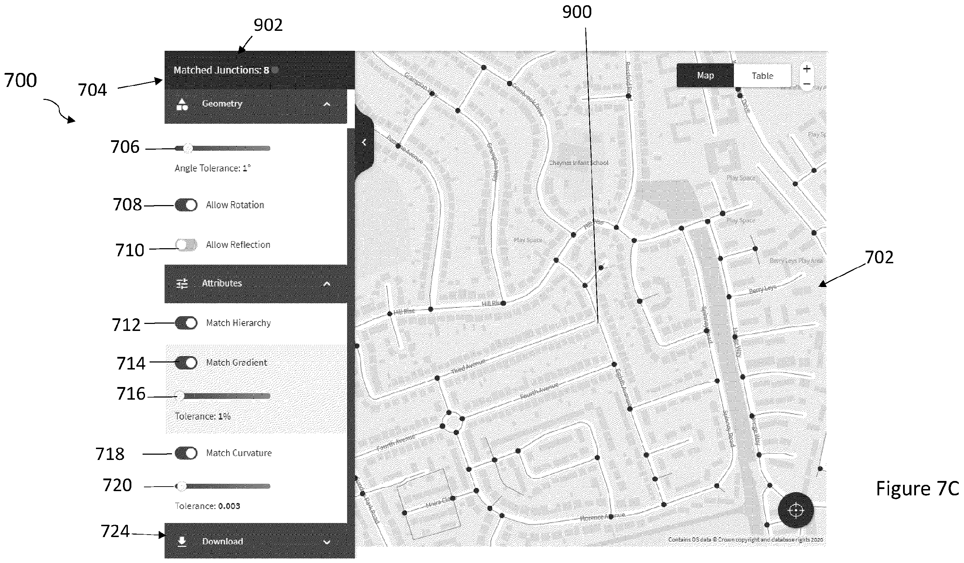

Figure 7C illustrates a further example of the user interface 700 in use. In this example, the user has selected a test junction node 900. This time, the user has selected to allow for rotation 708, but set an angle tolerance level 706 of 1°. They have also selected to match hierarchy 712, gradient 714 with a tolerance level 716 of 1% and curvature 718 with a tolerance level of 0.003. As before, the node matching program 626 will extract the relevant attribute data 624 of the matched junction and use this to match the target node 900 with other nodes within the topographic data 622. The node matching program 626 will start by matching according to the geometric search criteria. Once nodes that match the geometric criteria have been identified, the node matching program 626 will then match according to the other attributes defined in the search criteria. In this example, the search criteria required a much lower degree of tolerance, and so only 8 matched junctions 902 are identified.

Once a set of matched nodes have been generated, the matched nodes can be output for further processing and use in a number of different applications, which will now be described.

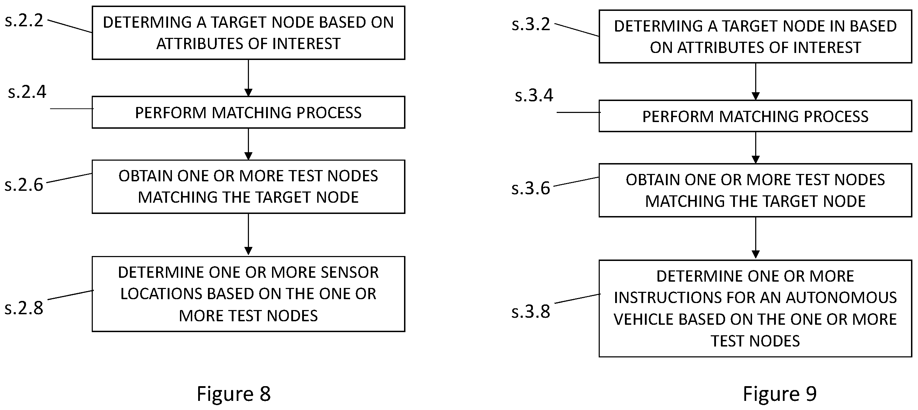

Figure 8 illustrates a first method in which the junction matching may be used to determine one or more locations in which to install one or more sensors. The sensors may be any type of sensor that may be needed along a road, for example, transponders for communicating with autonomous vehicles, image sensors or motion sensors for monitoring dangerous driving, or other passive road sensors for monitoring the condition of the road. In the first step 2.2, a target node is chosen based on the attributes of interest. For example, a target node where at least one of the road links is known to have a lot of sun glare may be selected to find other junctions that also experience the same problem, which may be particularly problematic for autonomous vehicles. In this case, the search criteria may be based on the absolute angle and the gradient to find road links in which drivers are commonly driving upwards and towards the sun. As another example, a target node that is known to have a lot of accidents due to a tight bend may be selected to identify other junctions with a similar configuration. In this case, the search criteria may be based on relative angle, allowing for reflection and the curvature of the road.

Once the user has input the search criteria, the matching process will be performed at s.2.4 as described above, with one or more test nodes that match the target node being identified and output at s.2.6.

Based on these matched test nodes and their geographic location, one or more sensor locations can be determined at s.2.8. For example, in the case of junctions with possible sun glare, one or more locations for installing transponders (e.g. on the link roads having an angular position that matches the problematic link road of the target node) so that autonomous vehicles can communicate with those transponders to guide the vehicle in the event that the vehicle sensors become impeded by the sun glare. In the case of junctions with tight bend, one or more locations for installing speed cameras, and other traffic control measures, may be determined.

Figure 9 illustrates a further method in which the junction matching may be used to determine instructions for an autonomous vehicle. In the first step 3.2, a target node is chosen based on the attributes of interest. For example, the user may need to identify all of the junctions in the United Kingdom with three or more road links that connect to the junction in close proximity in order to program an autonomous vehicle with the instructions needed to navigate these junctions. The search criteria may therefore include relative angles allowing for reflection, with a tolerance level of ±10°.

As before, once the user has input the search criteria, the matching process will be performed at s.3.4 as described above, with one or more test nodes that match the target node being identified and output at s.3.6.

Based on these matched test nodes, one or more instructions for the autonomous vehicle can be determined at s.3.8. For example, the instructions may include the one or more identified junctions and a set of rules for navigating these junctions based on their geometric configuration.

The above provides just two examples of the applications in which the junction matching may be used. Other applications include road planning applications such as the planning of traffic lights systems and other traffic control systems, and the installation of road safety measures on junctions that are similar to those that are known to have a high level of road incidents. As another example, the junction matching may be used for the planning of test centres for autonomous road vehicles, to assess whether the junctions in the test centres are representative of real world junctions.

Various modifications, whether by way of addition, deletion and/or substitution, may be made to all of the above described embodiments to provide further embodiments, any and/or all of which are intended to be encompassed by the appended claims.

For example, whilst the methods described above involve simple junctions comprising one node and a number of road links, it will be appreciated that the methods described herein may be extended to more complex junctions such as "spaghetti" junctions that involve multiple nodes and road links.

## Claims

1. A computer-implemented method of identifying matching road junctions in a network, the method comprising:
receiving instructions to identify one or more junctions based on a target junction;
identifying the target junction in a topographic dataset, the target junction comprising a node and a plurality of line features extending therefrom, wherein the topographic dataset comprises a first set of attribute data associated with the target junction, the first set of attribute data at least comprising an angular position of the plurality of line features about the node;
identifying a plurality of test junctions in the topographic dataset, wherein each of the plurality of test junctions comprises a node and a plurality of line features extending therefrom, and wherein the topographic dataset comprises respective sets of attribute data for each of the plurality of test junctions, the respective sets of attribute data at least comprising an angular position of the plurality of line features about the node;
comparing the first set of attribute data of the target junction to the respective sets of attribute data of the plurality of test junctions;
matching one or more test junctions to the target junction in dependence on said comparison; and
providing the one or more matched test junctions for output to the user.

2. A method according to claim 1, wherein the angular position of the plurality of line features is an absolute angular position measured from a fixed point.

3. A method according to claim 1, wherein the angular position of the plurality of line features is a relative angular position measured as an angle between adjacent line features.

4. A method according to claim 3, wherein the instructions comprise an instruction to compare the first set of attribute data of the target junction to the respective sets of attribute data of the plurality of test junctions based on the relative angular position.

5. A method according to claims 3 or 4, wherein the instructions comprise an instruction to compare the first set of attribute data of the target junction to the respective sets of attribute data of the plurality of test junctions based on a reflected angular position, wherein the comparing comprises calculating a reflected angular position based on the relative angular position.

6. A method according to any preceding claim, wherein the instructions comprise an input indicative of an angular tolerance level, the angular tolerance level being an acceptable amount of deviation from the angular positions of the plurality line features of the target junction.

7. A method according to claim 6, wherein the input indicative of an angular tolerance level is received via a dynamically adjustable input on a user interface.

8. A method according to any preceding claim, wherein the first set of attribute data and the respective sets of attribute data further comprises one or more of: a line feature hierarchy, a line feature gradient and a line feature curvature.

9. A method according to claim 8, wherein the instructions comprise at least one of:
an input indicative of a gradient tolerance level, the gradient tolerance level being an acceptable amount of deviation from the gradient of the plurality line features of the target junction; and
an input indicative of a curvature tolerance level, the curvature tolerance level being an acceptable amount of deviation from the curvature of the plurality line features of the target junction.

10. A method according to claim 9, wherein the input indicative of a gradient tolerance level and/or the input indicative of a curvature tolerance level are received via a dynamically adjustable input on a user interface.

11. A method according to any preceding claim, wherein the first set of attribute data and the respective sets of attribute data are stored in the topographic database in respective table structures.

12. A method according to any preceding claim, wherein providing the one or more matched test junctions for output to the user comprises generating a map image for output to a display device.

13. A method of determining sensor locations for a road network, comprising:
identifying a target junction based on one or more attributes of interest;
identifying one or more matching junctions according to the method of claims 1 to 12; and
determining one or more sensor locations based on the one or more matched test junction.

14. A method of determining instructions for controlling an autonomous vehicle, comprising:
identifying a target junction based on one or more attributes of interest;
identifying one or more matching junctions according to the method of claims 1 to 12; and
determining one or more instructions for the autonomous vehicle based on the one or more matched test junction.

15. A system, comprising:
a processor; and
a computer readable medium storing one or more instruction(s) arranged such that when executed the processor is caused to perform the method according to claims 1 to 14.
